# EUROPEAN PATENT APPLICATION

(11) **EP 1 506 894 A1**
(43) Date of publication of application: **16.02.2005**
(21) Application number: 04077291.5
(22) Date of filing: 11.08.2004
(51) Int. Cl.: B60R 7/04

(54) **Rigid based panel and multifunctional pocket assembly**

(30) Priority: 12.08.2003 IT mi20031648
(71) Applicant: Industrialesud S.p.A., 64100 Teramo (IT)
(72) Inventor: Di Sante, Giuseppe, 64026 Roseto Degli Abruzzi (Teramo) (IT); Biggio, Mario, 64026 Roseto Degli Abruzzi (Teramo) (IT); Collevecchio, Mariano, 64024 Notaresco (Teramo) (IT); D'Ambrosio, Patrizio, 64026 Roseto Degli Abruzzi (Teramo) (IT); Bessone, Giovanni, 12089 Villanova Mondovi (Cuneo) (IT); Taraschi, Alberto, 64100 Teramo (IT)
(74) Representative: De Gregori, Antonella

(57) **Abstract**

The present invention relates to an assembly consisting of a rigid based panel and multifunctional pocket sewn to the panel along at least one of its sides.

## Description

The present invention relates to an assembly consisting of a rigid based panel and multifunctional pocket.

In particular, the invention relates to a rigid based panel which can be used for the production of light, sound-absorbent, self-sustaining articles, having a general multifunctional pocket fixed thereto.

A typical application of the rigid based panel and pocket assembly according to the present invention is represented by all those lining and fitting elements for car interiors such as, for example, door paneling, rear-window shelves, boot or carrier hatchback paneling, upright coverings, sun visors for which certain requisites are necessary, such as lightness, self-sustainment (i.e. the capacity of sustaining self-weight without the necessity of supporting structures), sound-absorbance and/or flexibility.

These panels can be produced in numerous ways and can comprise one or more fixed rigid bases with the sandwich insertion of semi-rigid layers or made of expanded or spongy material, the panels can be moulded into the desired shape and possibly covered with linings.

Various materials can be used, generally of the polymeric plastic or composite type.

On the surface of these panels it is often advantageous to envisage a multifunctional pocket, referring to any kind of pocket destined for containing objects.

Applications of object-holder pockets or the like, with rigid or semi-rigid panels, for example effected by means of screws or plastic spring insertion mechanisms, are known in the car industry.

These systems however are relatively onerous due to the presence of details necessary for their assembly and the assembly times which negatively affect the cost of the end-product.

The Applicant has surprisingly found that by using industrial sewing machines, it is possible to sew all types of multifunctional pockets onto rigid based panels obtaining an economical assembly without the necessity of assembly mechanisms and without causing structural damage to the panel.

An objective of the present invention is to provide an assembly consisting of a rigid based panel and multifunctional pocket which overcomes the drawbacks of the known art and in particular which allows the production of an article in which the multifunctional pocket is rapidly and economically fixed to the rigid based panel without resorting to the use of screws or mechanisms and without jeopardizing the structural characteristics of the panel.

These and other objectives of the present invention are achieved by the rigid based panel and multifunctional pocket assembly according to what is specified in claim 1.

Further characteristics of the invention and non-evident variations thereof, form the object of the dependent claims.

An object of the present invention therefore relates to an assembly consisting of a rigid based panel and multifunctional pocket sewn along at least one of its sides to the panel.

The characteristics and advantages of the assembly consisting of a rigid based panel and multifunctional pocket according to the present invention, will appear more evident from the following illustrative but non-limiting description, referring to the enclosed schematic drawings, in which:

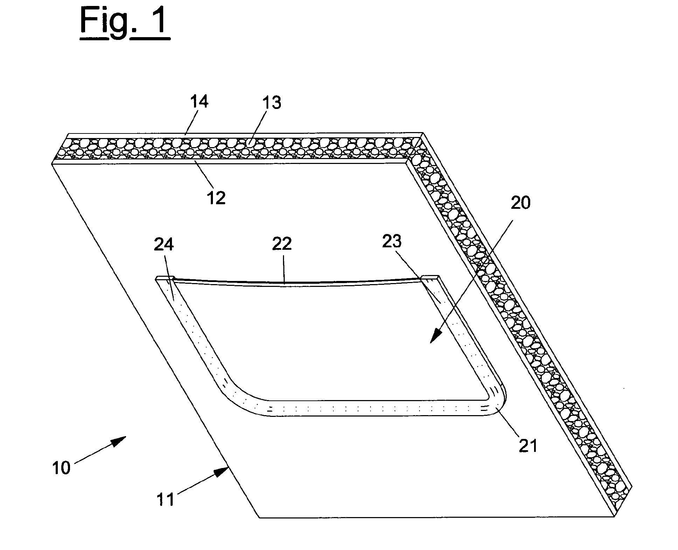

figure 1 shows an axonometric view of a portion of the rigid based panel and pocket assembly, according to the invention;

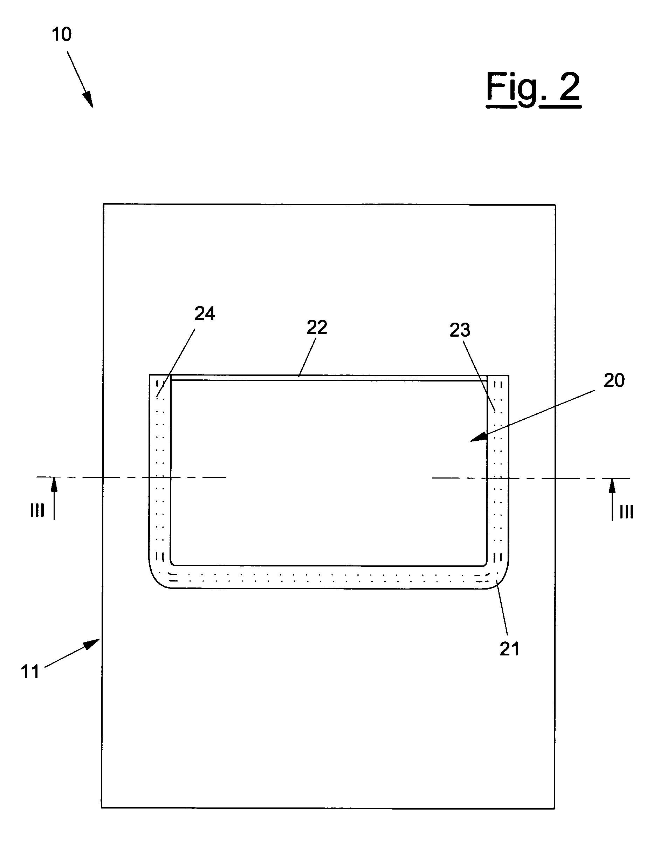

figure 2 whose a front view of the portion of the assembly of figure 1;

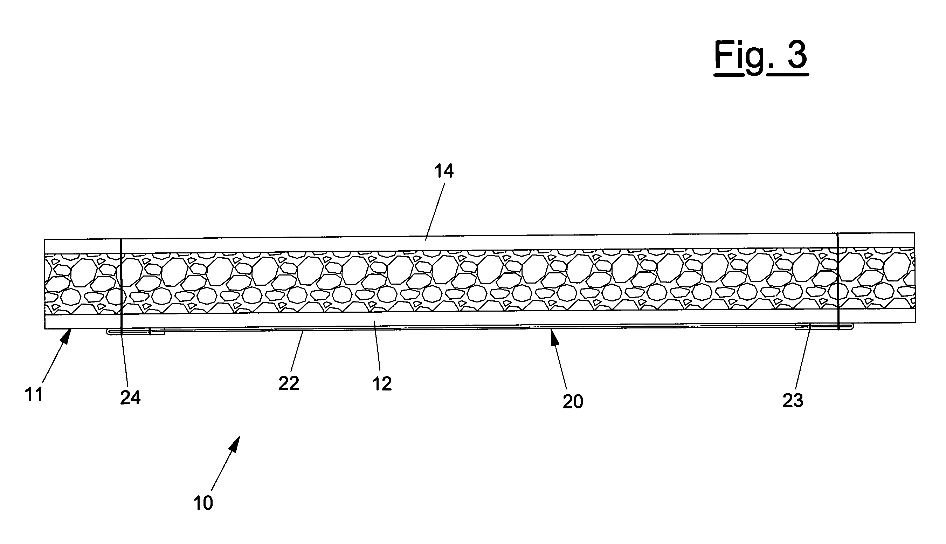

figure 3 is a section according to the line III-III of figure 2.

An assembly 10 consisting of a panel 11 with a rigid base 12, 14 and a multifunctional pocket 20, is illustrated in the figures, according to one of the possible embodiments of the invention, described below for purely illustrative and non-limiting purposes.

Said assembly 10 is particularly suitable for the car sector relating to the production of lining and fitting elements for car interiors such as, for example, door paneling, rear-window shelves, boot or carrier hatchback paneling, upright coverings, sun visors and in general all lining and fitting elements for car interiors, for which certain requisites are necessary, such as lightness, self-sustainment (i.e. the capacity of sustaining self-weight without the necessity of supporting structures), sound-absorbance and/or flexibility.

The panel 11 comprises two rigid bases 12 and 14, between which there is a generic semi-rigid layer 13, such as, for example a polymeric foam or a spongy material having sound-absorbent and/or insulating characteristics, in general.

The present invention can naturally be accomplished starting from panels having different constructions also comprising a single rigid base.

The panel thus obtained can envisage, on both outer surfaces of the sandwich bases, i.e. of the elements already coupled, or on one of these alone, the application of a lining fabric, layers of antivibration material, etc.

The thickness of the bases 12, 14 can vary from a few tens to several units of mm, without jeopardizing the embodiment of the invention.

The panel 11, according to the invention, has a fixed multifunctional pocket 20 assembled to the panel by means of at least one attachment seam 24 along at least one of its sides.

The term multifunctional pocket refers to any kind of pocket made of a suitable material, for example a fabric with a high resistance, not or only slightly subject to abrasion, destined for containing objects.

The pocket 20 can therefore have various forms depending on the different uses, such as for example, a simple pocket with an elasticized edge, with a zip or Velcro closure, in the form of a pouch, and a rigid or semi-rigid septum can be fixed in its interior to prevent deformation of the objects inserted therein, or it may also envisage further pockets connected thereto for separating the objects contained therein.

The pocket can generally have any kind of form which makes it functional as an object-holder for a wide range of items which can be useful in a car.

The attaching seam 24 is effected so as to cross both rigid bases 12, 14 with which the panel is equipped, or one of these alone.

The pocket according to the illustrative embodiment has a layer 22 with an edge 21 on at least three sides which has reinforcing and fixing structural functions and which can also be decorated using finishing edges and any other decorative element which improves the aesthetic appearance of the pocket.

Other forms of pocket naturally envisage other edge forms, for example it is possible to produce a purse-shaped pocket sewn along one side and closed by means of a zip fastener or similar devices along the remaining sides.

According to the invention, the attaching seam 24 extends for the whole edge 21, and the edge is produced to as to close and fix the perimeter of said layer 21 by means of a finishing seam 23.

Said seams can be either visible or invisible as the panel can be lined either before or after the sewing of the pocket.

## Claims

1. An assembly consisting of a panel (11) with a rigid base (12, 14) and a multifunctional pocket (20) **characterized in that** it comprises at least one attaching seam (24) along at least one of the sides of said pocket (20) for its assembly to said panel (11).

2. The assembly according to claim 1, wherein said panel (11) has a semi-rigid layer (13) situated between the two rigid bases (12, 14).

3. The assembly according to claim 1 or 2, wherein said attaching seam (24) is effected so as to cross at least one of the bases (12, 14) with which the panel is equipped.

4. The assembly according to claim 1, wherein said pocket (20) is produced in the form of a layer (22) having an edge (21) on at least three sides.

5. The assembly according to claim 4, wherein said attaching seam (24) extends for the whole edge (21).

6. The assembly according to claim 5, wherein said edge (21) is suitable for closing and fixing the perimeter of said layer (21) by means of a finishing seam (23).

7. The assembly according to claim 1, wherein said pocket (20) is produced in the form of a purse sewn along one side and which can be closed by means of a zip fastener along the remaining sides.

8. The assembly according to claim 5, wherein said pocket (20) is produced in the form of a pouch.
